# EUROPEAN PATENT APPLICATION

(11) **EP 4 303 154 A1**
(43) Date of publication of application: **10.01.2024**
(21) Application number: 22762329.5
(22) Date of filing: 19.01.2022
(51) Int. Cl.: B65G 1/02, B65G 1/04

(54) **GOODS SHELF AND WAREHOUSING SYSTEM**

(30) Priority: 04.03.2021 CN 202120471596 U
(71) Applicant: Hai Robotics Co., Ltd., Shenzhen, Guangdong 518000 (CN)
(72) Inventor: KONG, Zhe, Shenzhen, Guangdong 518000 (CN)
(74) Representative: Gulde & Partner
(86) International application number: PCT/CN2022/072807
(87) International publication number: WO 2022/183860

(57) **Abstract**

The present disclosure relates to the field of intelligent warehousing technologies, and provides a shelf and a warehousing system, to resolve a technical problem that it is difficult to control a spacing between adjacent goods on a shelf. The shelf includes a support frame and a first conveyor and a second conveyor arranged on the support frame. The first conveyor and the second conveyor form a goods conveying layer for conveying goods. The first conveyor is hinged with the support frame. The first conveyor is rotatably switched to a first limit position or a second limit position. When the first conveyor is at the first limit position, a second end of the first conveyor protrudes from an upper surface of the second conveyor, so that an end surface of the second end of the first conveyor is configured to block goods on the second conveyor. The warehousing system includes the above shelf. The present disclosure is intended to precisely control the spacing between adjacent goods on a shelf.

## Description

### CROSS-REFERENCE TO RELATED APPLICATIONS

This application claims priority to Chinese Patent Application No. 202120471596.9, filed with the China National Intellectual Property Administration on March 4, 2021 and entitled "SHELF AND WAREHOUSING SYSTEM", which is incorporated by reference herein in its entirety.

### TECHNICAL FIELD

The present disclosure relates to the field of intelligent warehousing technologies, and in particular, to a shelf and warehousing system.

### BACKGROUND

With the rapid development of e-commerce and logistics, a large amount of workloads such as warehousing, storage, sorting, and retrieval of various types of goods are required, and goods turnover is frequent. Target goods are carried to a sorting area by using a robot and then sorted manually, which can improve sorting efficiency.

The robot may dock with a manual sorting station through a flow rail on a shelf. That is to say, after the robot takes the goods, the robot unloads the goods to the flow rail, and the goods are moved to a front of a sorting person with the flow rail, and after the sorting person completes the sorting, the goods are moved out through another flow rail, and then the robot takes out the goods and carry the goods back to a warehousing shelf.

However, it is difficult to control a spacing between adjacent goods on the shelf, resulting in a low precision of taking goods on the shelf by fingers of the robot.

### SUMMARY

In view of the above problem, embodiments of the present disclosure provide a shelf and a warehousing system to precisely control a spacing between adjacent goods on a shelf, which can improve the precision of taking goods on a shelf by a robot, thereby improving the working efficiency of the robot.

In order to achieve the above objective, a first aspect of the embodiments of the present disclosure provides the following solutions:
An embodiment of the present disclosure provides a shelf, including a support frame and a first conveyor and a second conveyor arranged on the support frame. The first conveyor and the second conveyor form a goods conveying layer for conveying goods. A first end of the goods conveying layer is arranged obliquely downward, the first conveyor is hinged with the support frame, the first conveyor is rotatably switched to a first limit position or a second limit position, when the first conveyor is at the first limit position, a second end of the first conveyor protrudes from an upper surface of the second conveyor, so that an end surface of the second end of the first conveyor is configured to block goods on the second conveyor. When the first conveyor is at the second limit position, the first conveyor and the second conveyor form an inclined plane to release the goods on the second conveyor, so that the goods on the second conveyor are conveyed to the first conveyor.

In an optional implementation, a first reset mechanism is arranged on the support frame, the first reset mechanism is connected to the second end of the first conveyor, and when the goods leave the first conveyor, the first reset mechanism drives the first conveyor to reset from the first limit position to the second limit position.

In an optional implementation, a downward component force generated by goods on the first conveyor in a conveying direction is greater than a reset force of the first reset mechanism.

In an optional implementation, the first reset mechanism is a first elastic member, one end of the first elastic member is connected to the support frame, and the other end of the first elastic member is connected to a first end of the first conveyor.

In an optional implementation, the first reset mechanism is a spring.

In an optional implementation, a hinge bracket is further arranged on the support frame, the first conveyor is connected to the hinge bracket, the hinge bracket is hinged with the support frame, a projection of a hinge point between the support frame and the hinge bracket on the first conveyor is located between the first end and the second end of the first conveyor, and a distance between the first end of the first conveyor and the hinge point is greater than a distance between the second end of the first conveyor and the hinge point in the conveying direction of the goods.

In an optional implementation, a first limiting member and a second limiting member are respectively arranged at positions on the support frame corresponding to the two ends of the first conveyor, and the first limiting member and the second limiting member are respectively configured to limit the two ends of the first conveyor, so that the first conveyor swings between the first limit position and the second limit position.

In an optional implementation, the first limiting member and the second limiting member are limiting rods spaced apart on the support frame in the conveying direction of the goods.

In an optional implementation, a goods blocking mechanism is further arranged on the first end of the goods conveying layer, the goods blocking mechanism is switchably at a first position or a second position, when the goods blocking mechanism is at the first position, the goods blocking mechanism is configured to block goods on the first conveyor, and when the goods blocking mechanism is at the second position, the goods blocking mechanism is configured to release the goods on the first conveyor.

In an optional implementation, the goods blocking mechanism is hinged with the support frame, and the goods blocking mechanism is rotatable about the support frame to switch between the first position and the second position.

In an optional implementation, a second reset mechanism is arranged on the support frame, the goods blocking mechanism is connected to the second reset mechanism, and the second reset mechanism is configured to drive the goods blocking mechanism to reset from the second position to the first position.

In an optional implementation, the goods blocking mechanism includes a blocking portion and a connection portion, one end of the blocking portion is connected to and forms a preset included angle with one end of the connection portion, an other end of the connection portion is connected to the second reset mechanism, and when the goods leave the first conveyor, the second reset mechanism drives, through the connection portion, the blocking portion to reset from the second position to the first position, so that the blocking portion is configured to block the goods conveyed from the second conveyor to the first conveyor.

In an optional implementation, a length of the blocking portion is equal to a length of the connection portion, and when the goods blocking mechanism is at the second position, a height of the blocking portion and a height of a top of the connection portion are less than or equal to a height of a first end of the first conveyor.

In an optional implementation, the preset included angle between the blocking portion and the connection portion ranges from 60° to 90°.

In an optional implementation, the blocking portion and the connection portion form an L-shaped reversible stopper.

In an optional implementation, the second reset mechanism is a second elastic member, one end of the second elastic member is connected to the support frame, and the other end of the second elastic member is connected to the blocking portion.

In an optional implementation, the second reset mechanism is a spring.

In an optional implementation, an inclination angle of the goods conveying layer is greater than or equal to 3° and less than or equal to 9°.

In an optional implementation, at least two first conveyors and at least two second conveyors are arranged, and the at least two first conveyors and the at least two second conveyors are spaced apart in a direction perpendicular to a conveying direction of the goods.

In an optional implementation, the first conveyor and/or the second conveyor includes a plurality of rolling members arranged in sequence in the conveying direction of the goods, each of the rolling members has an outer contour surface configured for rolling contact with the goods, and the rolling member is configured to rotate in the conveying direction about an axis of rotation thereof to convey the goods in the conveying direction.

In an optional implementation, the rolling member is a rotating roller.

Compared with the related art, the shelf provided in the embodiments of the present disclosure has the following advantages:
According to the shelf provided in the embodiments of the present disclosure, the first conveyor is hanged with the support frame, the first conveyor is swingable relative to the support frame within a preset range so that the first conveyor is switchable to the first limit position or the second limit position, and when the first conveyor is at the first limit position, the second end of the first conveyor protrudes from the upper surface of the second conveyor, so that the end surface of the second end of the first conveyor may be configured to block the goods on the second conveyor, so as to prevent the goods on the second conveyor from further moving toward the first conveyor. In this way, a specific spacing can be maintained between the goods on the second conveyor and the goods on the first conveyor, so that the precision of the spacing between adjacent goods on the shelf is improved, which improves the precision of taking goods boxes by a robot, thereby improving the working efficiency of the robot. When the goods leave the first conveyor, the first conveyor may be switched to the second limit position. At this time, the first conveyor and the second conveyor form an inclined plane to release the goods on the second conveyor. In this way, the goods on the second conveyor may further move toward the first conveyor along the inclined plane formed by the first conveyor and the second conveyor, so that the goods on the second conveyor can be conveyed to the first conveyor. The structure is simple, and the operation is easy.

A second aspect of the embodiments of the present disclosure provides a warehousing system, including a robot and the shelf provided in the first aspect. The robot includes a body and a goods taking mechanism mounted to the body, the goods taking mechanism includes a tray and a telescopic arm assembly, the tray is configured to place goods, the telescopic arm assembly includes a telescopic arm and a movable push rod mounted to an end of the telescopic arm, and the movable push rod is configured to pull goods on the shelf onto the tray.

In addition to the technical problems resolved through the embodiments of the present disclosure described above, the technical features constituting the technical solutions, and the beneficial effects brought about by the technical features of the technical solutions, other technical problems that can be resolved through the shelf and the warehousing system provided in the embodiments of the present disclosure, other technical features included in the technical solutions, and the beneficial effects brought about by the technical features are described in further detail in detailed description.

### BRIEF DESCRIPTION OF THE DRAWINGS

To describe the technical solutions of the embodiments of the present disclosure or the related art more clearly, the following briefly describes the drawings required for describing the embodiments or the related art. Apparently, the drawings in the following description merely show some embodiments of the present disclosure, and a person of ordinary skill in the art may derive other drawings from these drawings without creative efforts.
FIG. 1 is a schematic structural diagram of a state of a shelf according to an embodiment of the present disclosure.
FIG. 2 is a schematic structural diagram of FIG. 1 from another perspective.
FIG. 3 is a partial schematic enlarged view of A in FIG. 2.
FIG. 4 is a schematic structural diagram of another state of the shelf according to an embodiment of the present disclosure.
FIG. 5 is a schematic diagram of a first state of conveying goods by the shelf according to an embodiment of the present disclosure.
FIG. 6 is a schematic diagram of a second state of conveying goods by the shelf according to an embodiment of the present disclosure.
FIG. 7 is a schematic diagram of a third state of conveying goods by the shelf according to an embodiment of the present disclosure.
FIG. 8 is a schematic structural diagram of FIG. 7 from another perspective.
FIG. 9 is a partial schematic enlarged view of B in FIG. 8.
FIG. 10 is a schematic diagram of a third state of conveying goods by the shelf according to an embodiment of the present disclosure.
FIG. 11 is a structural diagram of a robot according to another embodiment of the present disclosure.
FIG. 12 is a schematic diagram of a usage state of a goods taking mechanism in FIG. 11.

### Reference Numerals:

100-Shelf; 10-Support frame; 101-Hinge bracket; 102-First limiting member;
103-Second limiting member; 104-Base; 20-Goods conveying layer; 21-First conveyor;
22-Second conveyor; 30-First reset mechanism; 40-Goods blocking mechanism; 401-Blocking portion;
402-Connection portion; 50-Second reset mechanism; 200-Goods; 300-Robot; 301-Body;
31-Goods taking mechanism; 311-Tray; 312-Telescopic arm; 313-Fixed push rod; 314-Movable push rod.

### DETAILED DESCRIPTION

In the related art, it is difficult to control a spacing between adjacent goods on a shelf, resulting in a low precision of taking goods on the shelf by a robot. Main reasons for the low working efficiency of the robot are as follows: The shelf includes a support frame and at least one goods conveying layer located on the support frame. The goods conveying layer is a conveyor belt or a flow rail. The conveyor belt or the flow rail conveys goods from one end of the shelf to the other end. However, if a plurality of goods are successively conveyed on the goods conveying layer, it is difficult to control a spacing between adjacent goods, resulting in a technical problem that the precision of taking goods on the shelf by the robot is reduced.

In order to resolve the above technical problem, an embodiment of the present disclosure provides a shelf and a warehousing system. In the shelf, a first conveyor is hanged with a support frame, the first conveyor is swingable relative to the support frame within a preset range so that the first conveyor is switchable to a first limit position or a second limit position, and when the first conveyor is at the first limit position, a second end of the first conveyor protrudes from an upper surface of a second conveyor, so that an end surface of the second end of the first conveyor may be configured to block goods on the second conveyor, so as to prevent the goods on the second conveyor from further moving toward the first conveyor. In this way, a specific spacing can be maintained between the goods on the second conveyor and the goods on the first conveyor, so that the precision of the spacing between adjacent goods on the shelf is improved, which improves the precision of taking goods by a robot, thereby improving the working efficiency of the robot. When the goods leave the first conveyor, the first conveyor may be switched to the second limit position. At this time, the first conveyor and the second conveyor form an inclined plane to release the goods on the second conveyor. In this way, the goods on the second conveyor may further move toward the first conveyor along the inclined plane formed by the first conveyor and the second conveyor, so that the goods on the second conveyor can be conveyed to the first conveyor. The structure is simple, and the operation is easy.

In order to make the above objectives, features, and advantages of the embodiments of the present disclosure more apparent and easier to understand, the following provides a clear and complete description of the technical solutions in the embodiments of the present disclosure with reference the drawings. Obviously, the described embodiments are merely a part rather than all of embodiments of the present disclosure. All other embodiments obtained by a person of ordinary skill in the art based on the embodiments of the present disclosure without creative efforts shall fall within the protection scope of the present disclosure.

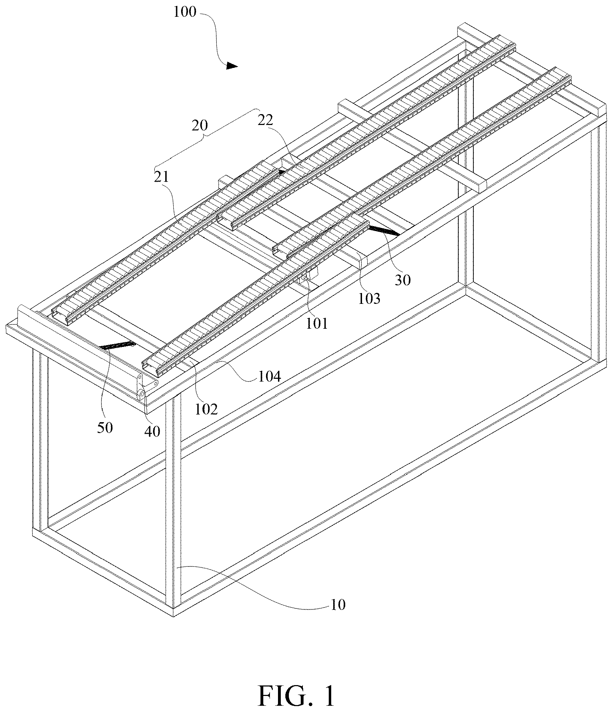

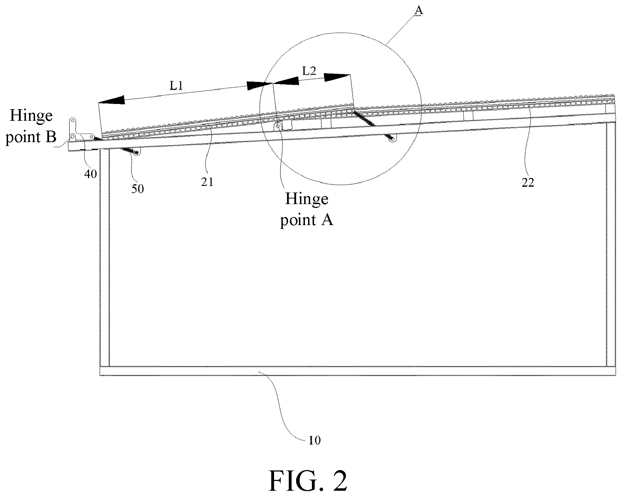

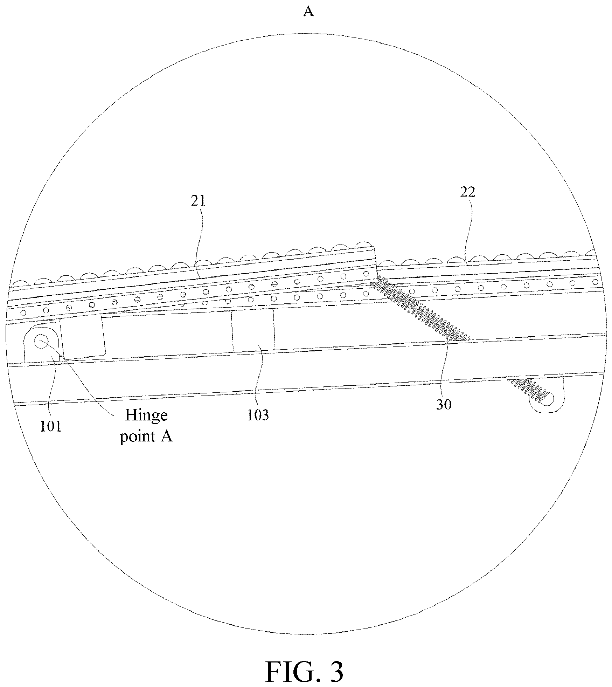

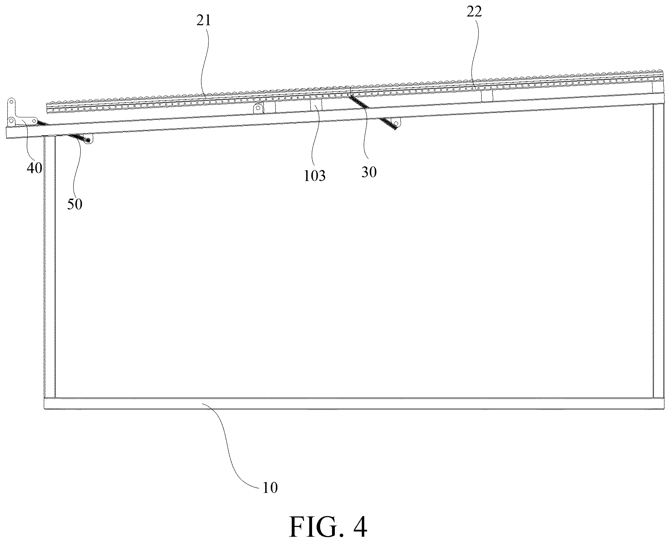

FIG. 1 is a schematic structural diagram of a state of a shelf according to an embodiment of the present disclosure. FIG. 2 is a schematic structural diagram of FIG. 1 from another perspective. FIG. 3 is a partial schematic enlarged view of A in FIG. 2. FIG. 4 is a schematic structural diagram of another state of the shelf according to an embodiment of the present disclosure.

As shown in FIG. 1 to FIG. 4, a shelf 100 provided in this embodiment of the present disclosure includes a support frame 10 and a first conveyor 21 and a second conveyor 22 arranged on the support frame 10. The first conveyor 21 and the second conveyor 22 form a goods conveying layer 20 for conveying goods. A first end of the goods conveying layer is arranged obliquely downward.

Specifically, the support frame 10 is in the shape of a frame. In order to maintain the stability of the support frame 10, the support frame 10 may include at least four legs. Adjacent legs may be connected through connecting rods to enhance the stability of the support frame 10, and the connecting rods may be connected at any position of the legs. This is not specifically limited in this embodiment. Alternatively, when four legs are arranged, four connecting rods connecting adjacent legs are connected end-to-end in sequence to form a rectangle. The legs are connected at a junction of two adjacent connecting rods, and the legs are arranged perpendicularly to the rectangle formed by the connecting rods.

In order to facilitate mounting of the goods conveying layer 20, a base 104 may be arranged on an upper end of the support frame 10, and the goods conveying layer 20 is connected to the base 104. The base 104 may be rectangular and may be defined by at least four connecting rods, and the base 104 may be connected to the legs, so as to support the base 104 through the legs. Heights of the two legs located at the first end of the goods conveying layer 20 may be less than heights of the two legs located at a second end of the goods conveying layer 20, to maintain the first end of the goods conveying layer 20 to be obliquely downward.

An included angle between the goods conveying layer 20 and a horizontal plane is greater than or equal to 3° and less than or equal to 9°, which helps a robot take goods 200 on the goods conveying layer 20 and prevents the goods 200 from falling off the goods conveying layer 20.

The goods 200 conveyed by the goods conveying layer 20 may be goods boxes or the like. In the present disclosure, the goods conveying layer 20 is configured to convey goods boxes, for example.

A first end of the first conveyor 21 is arranged close to the first end of the goods conveying layer 20, that is, the first conveyor 21 is located on a lower side of the goods conveying layer 20, and the second conveyor 22 is located on a higher side of the goods conveying layer 20, and the first conveyor 21 is hinged with the base 104 on the upper end of the support frame 10, so that the first conveyor 21 is swingable up and down relative to the base 104 within a preset range, and therefore the first conveyor 21 is switchable to a first limit position or a second limit position. When the first conveyor 21 is at the first limit position, as shown in FIG. 1 to FIG. 3, a second end of the first conveyor 21 protrudes from an upper surface of the second conveyor 22, so that an end surface of the second end of the first conveyor 21 is configured to block a goods box being conveyed on the second conveyor 22. That is to say, the goods box being conveyed on the second conveyor 22 stops movement when moving to abut against the end surface of the second end of the first conveyor 21. In this way, a specific spacing is maintained between the goods box being conveyed on the second conveyor 22 and the goods box on the first conveyor 21, so that the precision of the spacing between adjacent goods boxes on the shelf 100 is improved, which improves the precision of taking goods boxes by the robot, thereby improving the working efficiency of the robot.

As shown in FIG. 4, when the goods box on the first conveyor 21 leaves the first conveyor 21, the first conveyor 21 may be switched to the second limit position. At this time, the first conveyor 21 and the second conveyor 22 form an inclined plane to release the goods box on the second conveyor 22. In this way, the goods box on the second conveyor 22 may further move toward the first conveyor 21 along the inclined plane formed by the first conveyor 21 and the second conveyor 22, so that the goods box on the second conveyor 22 can be conveyed to the first conveyor 21. Not only the precision of the spacing between adjacent goods boxes on the shelf 100 is ensured, but also the structure is simple, and the operation is easy.

It should be noted that, when the first conveyor 21 is at the first limit position, the first conveyor 21 is at an angle to an upper surface of the base 104, when the first conveyor 21 is at the second limit position, the first conveyor 21 is parallel to the upper surface of the base 104. The second conveyor 22 is fixedly connected to the base 104 and arranged parallel to the upper surface of the base 104. Therefore, when the first conveyor 21 is at the second limit position, the first conveyor 21 and the second conveyor 22 form an inclined plane. The inclined plane is at an included angle to a horizontal plane.

At least two first conveyors 21 and at least two second conveyors 22 may be arranged, and the at least two first conveyors 21 and the at least two second conveyors 22 are spaced apart on the base 104 in a direction perpendicular to a conveying direction of the goods box.

The first conveyor 21 and/or the second conveyor 22 may include a plurality of rolling members arranged in sequence in the conveying direction of the goods box, each of the rolling members has an outer contour surface configured for rolling contact with the goods 200, and the rolling member is configured to rotate in the conveying direction of the goods box about an axis of rotation thereof to convey the goods in the conveying direction.

For example, the rolling member may be a rotating roller, a drum, or the like. Due to the downward inclination of the first end of the goods conveying layer 20, the goods box can slide downward in a direction of the inclination without requiring power, thereby saving energy, reducing the conveying costs of the goods box, and realizing a simple structure.

In order to enable the first conveyor 21 to switch between the first limit position and the second limit position, a first reset mechanism 30 is further arranged on the support frame 10. Specifically, the first reset mechanism 30 may be mounted to the base 104. The first reset mechanism 30 may be a first elastic member. For example, the first reset mechanism 30 may be a spring structure such as a tension spring with one end fixedly connected to the base 104 and the other end connected to the first end of the first conveyor 21. When the goods box leaves the first conveyor 21, an elastic force of the tension spring pulls the first conveyor 21 back from the first limit position to the second limit position, which causes the first conveyor 21 and the second conveyor 22 to be parallel to the upper surface of the base 104 without requiring any additional external force, so that the first conveyor 21 and the second conveyor 22 form an inclined plane to release the goods box on the second conveyor 22, thereby enabling the goods box on the second conveyor 22 to slide onto the first conveyor 21 along the inclined plane.

As the goods box slides from the second end to the first end on the first conveyor 21, a downward component force generated by the first conveyor 21 on the goods box in the conveying direction needs to be greater than a reset force of the first reset mechanism 30. In this way, the downward component force generated by the first conveyor 21 on the goods box in the conveying direction can overcome the reset force of the first reset mechanism 30, so as to enable the first conveyor 21 to switch from the second limit position to the first limit position, so that the second end of the first conveyor 21 blocks the goods box on the second conveyor 22. After the goods box on the first conveyor 21 leaves the first conveyor 21, the first conveyor 21 switches from the first limit position to the second limit position through the reset force of the first reset mechanism 30, so that the goods box on the second conveyor 22 continues to move toward the first conveyor 21. When the shelf 100 needs to successively convey a plurality of goods boxes, the above actions are repeated. The first conveyor 21 continuously switches between the first limit position and the second limit position and repeats the actions, to achieve conveying of the goods boxes.

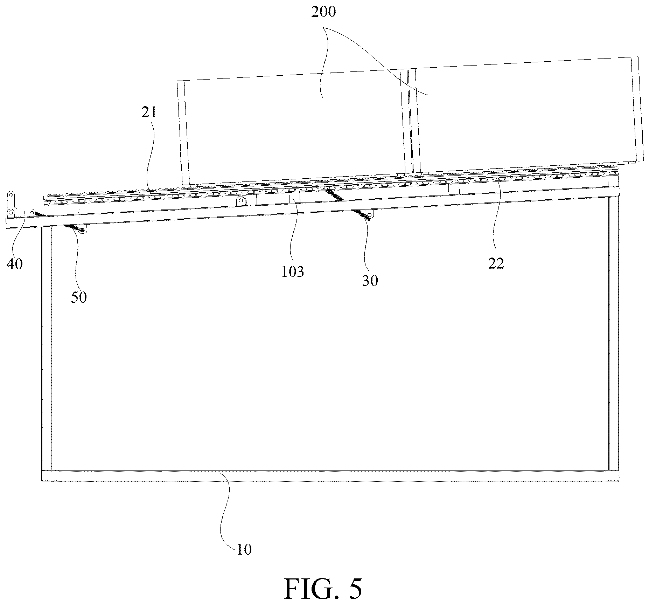

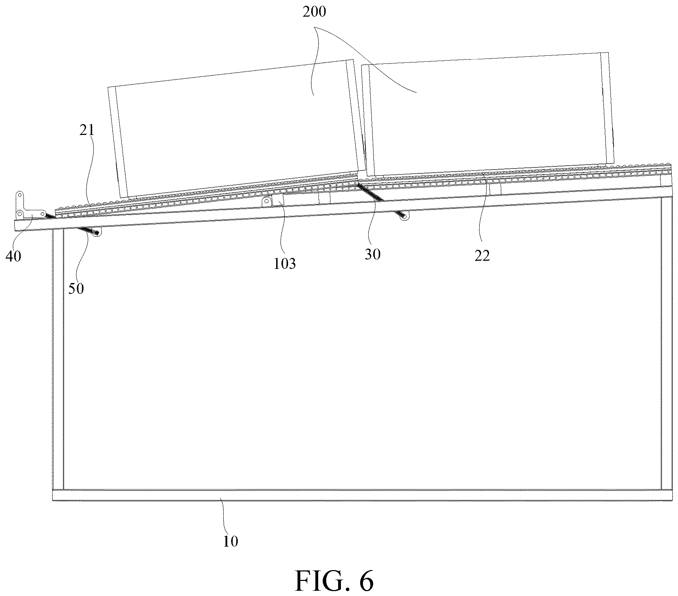

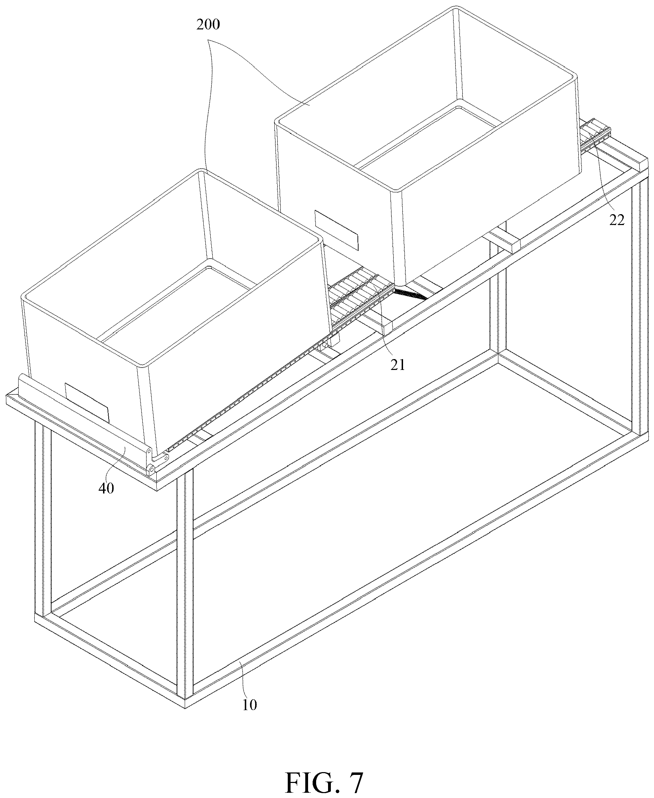

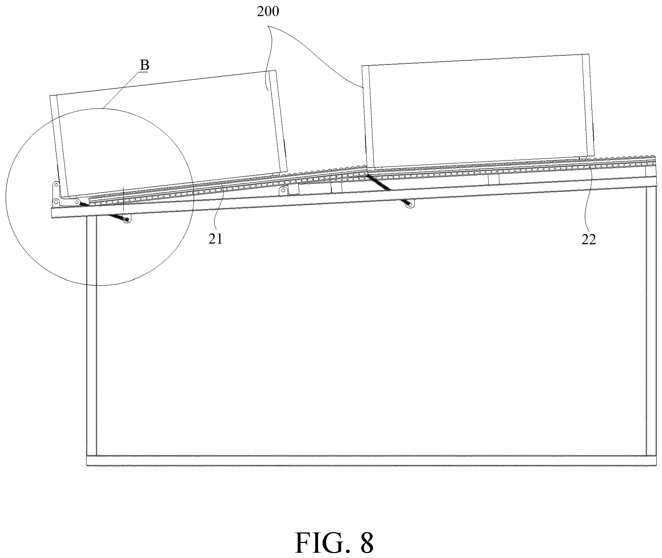

FIG. 5 is a schematic diagram of a first state of conveying goods by the shelf according to an embodiment of the present disclosure. FIG. 6 is a schematic diagram of a second state of conveying goods by the shelf according to an embodiment of the present disclosure. FIG. 7 is a schematic diagram of a third state of conveying goods by the shelf according to an embodiment of the present disclosure. FIG. 8 is a schematic structural diagram of FIG. 7 from another perspective.

For specific conveying of the goods boxes, refer to FIG. 5 and FIG. 6. A plurality of goods boxes are successively being conveyed from the second conveyor 22 to the first conveyor 21 in the conveying direction. When the first conveyor 21 is in an unoccupied state, the first conveyor 21 forms an inclined plane with the second conveyor 22 under the action of the reset force of the first reset mechanism 30 on the first conveyor 21. A first goods box on the second conveyor 22 moves toward the first conveyor 21 from the second conveyor 22. After the first goods box on the second conveyance 22 is conveyed to the first conveyor 21, as the first goods box gradually moves from the second end of the first conveyor 21 to the first end, a downward component force generated by the first goods box overcomes the reset force of the first reset mechanism 30 (for example, a tensile force of the tension spring), so that the first conveyor 21 switches from the second limit position to the first limit position, as shown in FIG. 7 and FIG. 8. At this time, a second goods box on the second conveyor 22 abuts against the end surface of the second end of the first conveyor 21, so that the second goods box is prevented from moving toward the first conveyor 21. In this way, a specific spacing can be maintained between the first goods box and the second goods box, which improves the precision of taking the goods box on the first conveyor 21 by a goods taking device such as the robot, thereby improving the working efficiency.

After the goods box on the first conveyor 21 is taken away, the first conveyor 21 switches from the first limit position to the second limit position through the reset force of the first reset mechanism 30, so that the first conveyor 21 is flush with the upper surface of the second conveyor 22, and therefore the second goods box continues to move toward the first conveyor 21. The operation is repeated to successively convey the plurality of goods boxes from the second conveyor 22 to the first conveyor 21, thereby realizing the conveying of the goods boxes.

In order to avoid a failure of the first conveyor 21 to switch to the first limit position as a result of an excessive reset force of the first reset mechanism 30, in this embodiment, the downward component force generated by the goods box on the first conveyor 21 in the conveying direction needs to be greater than the reset force of the first reset mechanism 30. In this way, the first conveyor 21 can switch between the first limit position and the second limit position.

Based on the above embodiment, a hinge bracket 101 is further arranged on the support frame 10. The hinge bracket 101 may be specifically arranged on the base 104 of the support frame 10. For example, a fixed rod may be arranged on the base 104 with the rectangular frame, and the hinge bracket 101 is hinged with the fixed rod. The hinge bracket 101 hinged with the base 104 at a hinge point A, and the first conveyor 21 is fixedly connected to the hinge bracket 101, thereby achieving hinge between the first conveyor 21 and the support frame 10.

As shown in FIG. 2, a projection of the hinge point A on the first conveyor 21 is located between the first end and the second end of the first conveyor 21, and a distance between the first end of the first conveyor 21 and the hinge point A (represented by L1) is greater than a distance between the second end of the first conveyor 21 and the hinge point A (represented by L2) in the conveying direction of the goods box. In this way, when the first conveyor 21 conveys the goods box, a torque at the first end of the first conveyor 21 is greater than a torque at the second end of the first conveyor 21, which facilitates the switching of the first conveyor 21 from the second limit position to the first limit position.

In order to improve the precision of the swinging of the first conveyor 21 relative to the support frame 10 within the preset range, in this embodiment, a first limiting member 102 and a second limiting member 103 are respectively arranged at positions on the support frame 10 corresponding to the two ends of the first conveyor 21. That is to say, the first limiting member 102 is arranged at the position on the support frame 10 corresponding to the first end of the first conveyor 21, and the second limiting member 103 is arranged at the position on the support frame 10 corresponding to the second end of the first conveyor 21. When the first conveyor 21 switches to the first limit position, the first limiting member 102 limits the first end of the first conveyor 21 to prevent the first conveyor 21 from further rotation. When the first reset mechanism 30 resets the first conveyor 21 from the first limit position to the second limit position, the second limiting member 103 limits the first conveyor 21. Due to the limitation imposed on the first conveyor 21 by the second limiting member 103 and the first reset mechanism 30, the first conveyor 21 and the upper surface of the second conveyor 22 are parallel to each other and form an inclined plane for the conveying goods box to slide, thereby improving the precision of the swinging of the first conveyor 21 relative to the support frame 10 within the preset range.

During specific implementation, when the shelf 100 needs to successively convey a plurality of goods boxes, the plurality of goods boxes are successively placed on the second conveyor 22. Due to the downward inclination of the goods conveying layer 20 from the second conveyor 22 to the first conveyor 21, the goods boxes are subjected to a gravity, so that the goods boxes slide from the second conveyor 22 toward the first conveyor 21. When a center of gravity of a first goods box crosses the hinge point A by a short distance, the first conveyor 21 rotates counterclockwise about the hinge point A due to a downward component force generated by the goods box until the first end of the first conveyor 21 contacts the first limiting member 102, and the first conveyor 21 is at the first limit position. At this time, the second end of the first conveyor 21 protrudes from the upper surface of the second conveyor 22, so that a to-be-conveyed second goods box is blocked by an end portion of the second end of the second conveyor 22 and therefore cannot slide toward the first conveyor 21. After the first goods box is removed, the first conveyor 21 is in an unoccupied state. At this time, the first conveyor 21 rotates clockwise through the tensile force of the tension spring or the like on the first conveyor 21. When the second end of the first conveyor 21 contacts the second limiting member 103, the first conveyor 21 is at the second limit position, so that the first conveyor 21 and the second conveyor 22 are parallel to each other and form an inclined plane for conveying the goods box.

The first limiting member 102 and the second limiting member 103 may be limiting rods arranged on the support frame 10. The first limiting member 102 and the second limiting member 103 may be specifically arranged on the base 104 on the support frame 10, and are spaced apart from each other on the base 104 in the conveying direction of the goods box, as long as the two ends of the first conveyor 21 can be limited.

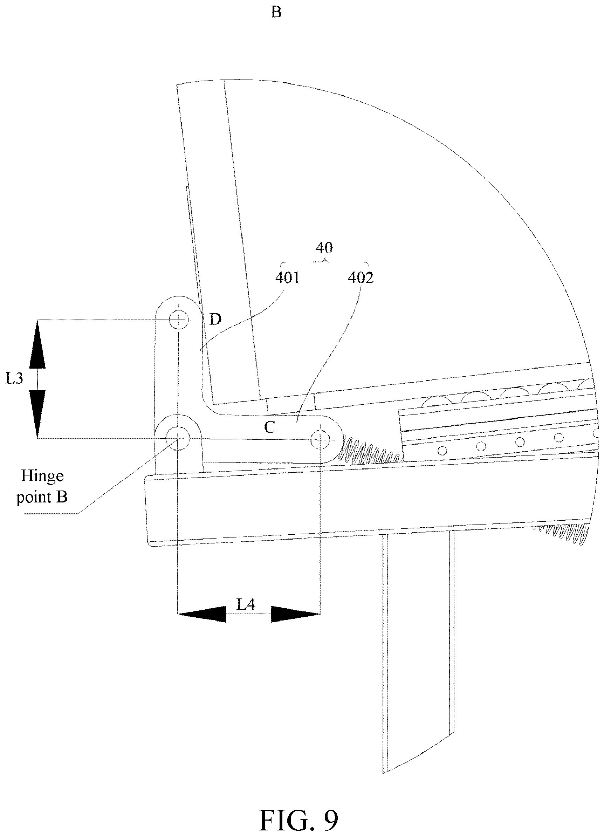

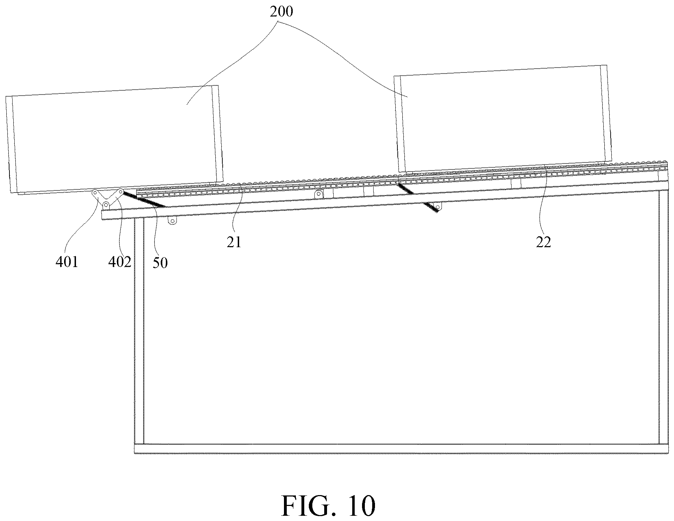

FIG. 9 is a partial schematic enlarged view of B in FIG. 8. FIG. 10 is a schematic diagram of a third state of conveying goods by the shelf according to an embodiment of the present disclosure.

As shown in FIG. 1 to FIG. 10, a goods blocking mechanism 40 is further arranged on the first end of the goods conveying layer 20. The goods blocking mechanism 40 is switchably at a first position or a second position. When the goods blocking mechanism 40 is at the first position, the goods blocking mechanism 40 is configured to block a goods box on the first conveyor 21, to prevent the goods box on the first conveyor 21 from sliding off from the first end of the first conveyor 21. The goods blocking mechanism 40 may block the goods box on the first conveyor 21 at the first end of the first conveyor 21 for taking by the robot. If the robot wants to take away the goods box on the first conveyor 21, the goods blocking mechanism 40 may switch from the first position to the second position to release the goods box on the second conveyor 22, so that the robot can successfully take away the goods box.

In order to facilitate the switching of the goods blocking mechanism 40 between the first position and the second position, the goods blocking mechanism 40 may be hinged with the support frame 10. Specifically, the goods blocking mechanism 40 may be hinged with the base 104 on the support frame 10, so that the goods blocking mechanism 40 can rotate about the base 104, thereby facilitating the switching of the goods blocking mechanism 40 between the first position and the second position.

During specific implementation, an initial state of the goods blocking mechanism 40 is at the first position. When the goods box on the first conveyor 21 slides downward from the second end of the first conveyor 21 to the first end, the goods blocking mechanism 40 provides blocking at the first end of the goods conveying layer 20, to prevent the goods box on the first conveyor 21 from sliding out. When the robot needs to take way the goods box on the first conveyor 21 through dragging or the like, as shown in FIG. 10, the goods blocking mechanism 40 rotates about the base 104 through pushing of the goods box, to switch the goods blocking mechanism 40 from the first position to the second position. When the goods blocking mechanism 40 is at the second position, an upper end surface of the goods blocking mechanism 40 is flush with the upper surface of the first conveyor 21 or lower than the upper surface of the first conveyor 21, to release the goods box on the first conveyor 21, so that the robot can take away the goods box.

In order to facilitate the resetting of the goods blocking mechanism 40 from the second position to the first position, in this embodiment, a second reset mechanism 50 is further arranged on the support frame 10. The goods blocking mechanism 40 is connected to the second reset mechanism 50. The second reset mechanism 50 is configured to drive the goods blocking mechanism 40 to reset from the second position to the first position.

The second reset mechanism 50 may be a second elastic member, and the second elastic member may be an elastic structure such as a spring, for example, a tension spring.

Specifically, when the second reset mechanism 50 is the second elastic member, one end of the second reset mechanism 50 is fixed to the support frame 10, specifically, may be fixedly connected to the base 104 on the support frame 10, and the other end of the second reset mechanism 50 is connected to the goods blocking mechanism 40. When the goods box on the first conveyor 21 is dragged by the robot, the goods blocking mechanism 40 rotates from the first position to the second position through the pushing force of the goods box, to release the goods box on the first conveyor 21. When the goods box on the first conveyor 21 is dragged away, the goods blocking mechanism 40 is reset from the second position to the first position through a traction force (such as a tensile force of the tension spring) of the second reset mechanism 50, to prevent the goods box conveyed from the second conveyor 22 to the first conveyor 21 from slipping, thereby improving the safety and reliability of conveying goods boxes by the shelf 100. The structure is simple, the operation is easy, and the costs are low.

In an optional embodiment, as shown in FIG. 9, the goods blocking mechanism 40 includes a blocking portion 401 and a connection portion 402. One end of the blocking portion 401 is connected to and forms a preset included angle with one end of the connection portion 402, and an other end of the connection portion 402 is connected to the second reset mechanism 50. When the goods box leaves the first conveyor 21, the second reset mechanism 50 drives, through the connection portion 402, the blocking portion 401 to reset from the second position to the first position, so that the blocking portion 401 is configured to block the goods box conveyed from the second conveyor 22 to the first conveyor 21.

In an embodiment, a length of the blocking portion 401 is equal to a length of the connection portion 402, and when the goods blocking mechanism 40 is at the second position, a height of the blocking portion 401 and a height of a top of the connection portion 402 are less than or equal to a height of the first end of the first conveyor 21, to avoid interference to the goods box caused by large heights of the top of the blocking portion 401 and the connection portion 402. In this way, the goods box on the first conveyor 21 can be successfully dragged away by a structure such as the robot.

In addition, the preset included angle between the blocking portion 401 and the connection portion 402 may be between 60° and 90°. For example, the preset included angle between the blocking portion 401 and the connection portion 402 is 60°, 75°, 90°, or the like, as long as the blocking portion 401 can block the goods box on the first conveyor 21 when the goods blocking mechanism 40 is at the first position. This is not specifically limited in this embodiment.

Exemplarily, the preset included angle between the blocking portion 401 and the connection portion 402 is 90°, and the blocking portion 401 and the connection portion 402 form an L-shaped reversible stopper. A corner of the L-shaped reversible stopper is hinged with the base 104 on the support frame 10. When the robot drags the goods box, the reset force of the second reset mechanism 50 is overcome, so that the L-shaped reversible stopper rotates counterclockwise relative to the base 104, and a height of the goods box close to the robot increases with the rotation of the L-shaped reversible stopper. When the L-shaped reversible stopper rotates to be flush with the upper surface of the first conveyor 21, the L-shaped reversible stopper is at the second position, so that the goods box may be dragged away by the robot. After the goods box is dragged away by the robot, the pushing of the goods box disappears, so that the L-shaped reversible stopper restores to the first position through the tensile force of a structure such as the tension spring. The above actions are repeated during successive conveying of the goods boxes on the second conveyor 22 through the first conveyor 21.

As shown in FIG. 9, when the goods box on the first conveyor 21 abuts against the L-shaped reversible stopper, a contact point between the goods box and the blocking portion 401 is a point D, and a contact point between the goods box and the connection portion 402 is a point C. A magnitude of a force exerted by the goods box on the contact point D is represented by F1, and a magnitude of a force exerted by the goods box on the contact point C is represented by F2. The L-shaped reversible stopper can only rotate about a hinge point with the support frame 10. The hinge point is represented by B. An equivalent force arm of the point C is a distance from the point C to the point B, which may be represented by L4, and an equivalent force arm of the point D is a distance from the point D to the point B, which may be represented by L3. Therefore, a moment of the box to the point D is T1=F1 *L3, and a moment of the box to the point C is T2=F2*L4. The box can continue to slide off the first conveyor 21 when T1 is greater than T2. F1 is a drag force of the robot plus a component force of a downward sliding force of the goods box along the first conveyor 21, and F2 is a downward component force of the gravity of the goods box in a vertical direction. A weight of the goods box and the downward sliding force of the goods box along the first conveyor 21 are fixed values. Therefore, the box can be dragged away from the first conveyor 21 by adjusting a ratio of L3 to L4 while ensuring a sufficient drag force of the robot, so that the goods box passes through a top of the L-shaped reversible stopper. After the goods box leaves the first conveyor 21, the L-shaped reversible stopper is reset to the first position through a tensile force of an elastic element such as the tension spring. Therefore, adjusting the magnitude of the force arm or the dragging force of the robot to control the switching of the L-shaped reversible stopper from the first position to the second position requires a simple structure, is easy to implement, and requires low costs.

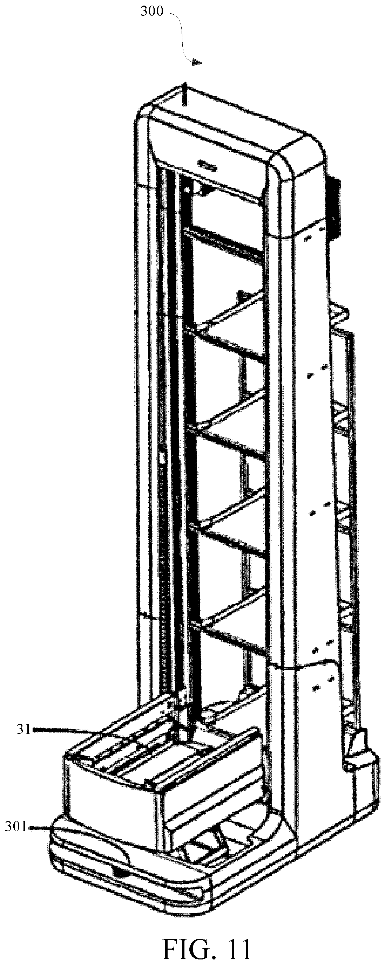

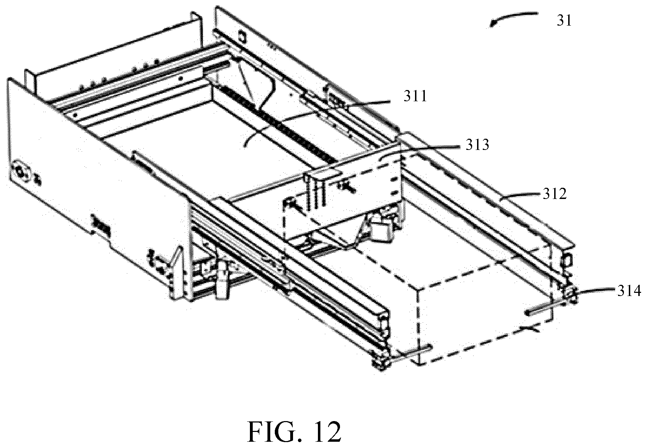

FIG. 11 is a structural diagram of a robot according to another embodiment of the present disclosure. FIG. 12 is a schematic diagram of a usage state of a goods taking mechanism in FIG. 11.

As shown in FIG. 11 and FIG. 12, the present disclosure further provides a warehousing system, including a robot 300 and the shelf 100 in the above embodiment.

The robot 300 includes a body 301 and a goods taking mechanism 31 mounted to the body 301. The goods taking mechanism 31 includes a tray 311 and a telescopic arm assembly. The tray 311 is configured to place goods and may be a flat plate horizontally arranged. The telescopic arm assembly is configured to push goods placed on the tray 311 out of the tray 311 or pull goods to the tray 311. The telescopic arm assembly includes a telescopic arm 312, a fixed push rod 313, and a movable push rod 314. The telescopic arm 312 includes a left telescopic arm and a right telescopic arm. The telescopic arm 312 may stretch horizontally. In a direction perpendicular to the stretching direction of the telescopic arm 312 and parallel to the tray 311, the telescopic arm 312 is located on a side of the tray 311. The telescopic arm 312 is powered by a motor. The power is transmitted by a chain wheel mechanism. According to an actual situation, the chain wheel mechanism may be replaced by a transmission mechanism such as a belt pulley mechanism or a screw mechanism for driving. The fixed push rod 313 and the movable push rod 314 are both mounted to the telescopic arm 312, and the fixed push rod 313 and the movable push rod 314 may stretch with the telescopic arm 312. The fixed push rod 313 and the tray 311 are located on the same side of the telescopic arm 312. When the telescopic arm 312 stretches, the fixed push rod 313 is configured to push goods out of the tray 311. The movable push rod 314 may be received in the telescopic arm 312. When the movable push rod 314 is not received in the telescopic arm 312, the movable push rod 314, the fixed push rod 313, and the tray 311 are located on the same side of the telescopic arm 312, and the movable push rod 314 is located in a stretching direction of the fixed push rod 313 along the telescopic arm 312. The movable push rod 314 may be directly driven by a motor. Depending on an actual situation, the power may alternatively be transmitted by using a transmission mechanism such as a gear set or a link mechanism. When the movable push rod 314 is not received in the telescopic arm 312 and the telescopic arm 312 retracts, the movable push rod 314 is configured to pull goods on the shelf 100 to the tray 311.

The shelf is the shelf 100 in the above embodiment, and a basic structure and a working principle thereof have been described in detail in the above embodiment. Therefore, the details are not enumerated herein.

The embodiments or the implementations in the description are described in a progressive manner. Each embodiment focuses on the differences from other embodiments, and for the same and similar parts of the embodiments, reference may be made to each other.

In the description, descriptions using reference terms "an implementation", "some implementations", "an exemplary implementation", "an example", "a specific example", or "some examples" mean that specific features, structures, materials, or characteristics described with reference to implementations or examples are included in at least one implementation or example of the present disclosure. In the description, schematic description of the above terms is not necessarily directed at the same implementation or example. In addition, the described specific features, structures, materials, or characteristics may be combined in a proper manner in any one or more implementations or examples.

Finally, it is to be noted that, the above embodiments are merely used for describing the technical solutions of the present disclosure, and are not intended to limit the present disclosure. Although the present disclosure is described in detail with reference to the above embodiments, a person of ordinary skill in the art should understand that they can still make modifications to the technical solutions recited in the above embodiments or make equivalent replacements to a part or all of the technical features thereof; and these modifications or replacements will not cause the essence of corresponding technical solutions to depart from the scope of the technical solutions in the embodiments of the present disclosure.

## Claims

1. A shelf, comprising a support frame, a first conveyor and a second conveyor arranged on the support frame, wherein the first conveyor and the second conveyor form a goods conveying layer for conveying goods; and
a first end of the goods conveying layer is arranged obliquely downward, the first conveyor is hinged with the support frame, the first conveyor is rotatably switched to a first limit position or a second limit position, when the first conveyor is at the first limit position, a second end of the first conveyor protrudes from an upper surface of the second conveyor, so that an end surface of the second end of the first conveyor is configured to block goods on the second conveyor, and when the first conveyor is at the second limit position, the first conveyor and the second conveyor form an inclined plane to release the goods on the second conveyor, so that the goods on the second conveyor are conveyed to the first conveyor.

2. The shelf according to claim 1, wherein a first reset mechanism is arranged on the support frame, the first reset mechanism is connected to the second end of the first conveyor, and when goods 200 leave the first conveyor, the first reset mechanism drives the first conveyor to reset from the first limit position to the second limit position.

3. The shelf according to claim 2, wherein a downward component force generated by goods on the first conveyor in a conveying direction is greater than a reset force of the first reset mechanism.

4. The shelf according to claim 3, wherein the first reset mechanism is a first elastic member, one end of the first elastic member is connected to the support frame, and the other end of the first elastic member is connected to a first end of the first conveyor.

5. The shelf according to claim 4, wherein the first reset mechanism is a spring.

6. The shelf according to any of claims 1 to 5, wherein a hinge bracket is further arranged on the support frame, the first conveyor is connected to the hinge bracket, the hinge bracket is hinged with the support frame, a projection of a hinge point between the support frame and the hinge bracket on the first conveyor is located between the first end and the second end of the first conveyor, and a distance between the first end of the first conveyor and the hinge point is greater than a distance between the second end of the first conveyor and the hinge point in the conveying direction of the goods.

7. The shelf according to claim 6, wherein a first limiting member and a second limiting member are respectively arranged at positions on the support frame corresponding to the two ends of the first conveyor, and the first limiting member and the second limiting member are respectively configured to limit the two ends of the first conveyor, so that the first conveyor swings between the first limit position and the second limit position.

8. The shelf according to claim 7, wherein the first limiting member and the second limiting member are limiting rods spaced apart on the support frame in the conveying direction of the goods.

9. The shelf according to claim 1, wherein a goods blocking mechanism is further arranged on the first end of the goods conveying layer, the goods blocking mechanism is switchably at a first position or a second position, when the goods blocking mechanism is at the first position, the goods blocking mechanism is configured to block goods on the first conveyor, and when the goods blocking mechanism is at the second position, the goods blocking mechanism is configured to release the goods on the first conveyor.

10. The shelf according to claim 9, wherein the goods blocking mechanism is hinged with the support frame, and the goods blocking mechanism is rotatable about the support frame to switch between the first position and the second position.

11. The shelf according to claim 10, wherein a second reset mechanism is arranged on the support frame, the goods blocking mechanism is connected to the second reset mechanism, and the second reset mechanism is configured to drive the goods blocking mechanism to reset from the second position to the first position.

12. The shelf according to claim 11, wherein the goods blocking mechanism comprises a blocking portion and a connection portion, one end of the blocking portion is connected to and forms a preset included angle with one end of the connection portion, an other end of the connection portion is connected to the second reset mechanism, and when the goods leave the first conveyor, the second reset mechanism drives, through the connection portion, the blocking portion to reset from the second position to the first position, so that the blocking portion is configured to block the goods conveyed from the second conveyor to the first conveyor.

13. The shelf according to claim 12, wherein a length of the blocking portion is equal to a length of the connection portion, and when the goods blocking mechanism is at the second position, a height of the blocking portion and a height of a top of the connection portion are less than or equal to a height of a first end of the first conveyor.

14. The shelf according to claim 12, wherein the preset included angle between the blocking portion and the connection portion ranges from 60° to 90°.

15. The shelf according to claim 14, wherein the blocking portion and the connection portion form an L-shaped reversible stopper.

16. The shelf according to claim 12, wherein the second reset mechanism is a second elastic member, one end of the second elastic member is connected to the support frame, and the other end of the second elastic member is connected to the blocking portion.

17. The shelf according to claim 16, wherein the second reset mechanism is a spring.

18. The shelf according to claim 1, wherein an inclination angle of the goods conveying layer is greater than or equal to 3° and less than or equal to 9°.

19. The shelf according to claim 1, wherein at least two first conveyors and at least two second conveyors are arranged, and the at least two first conveyors and the at least two second conveyors are spaced apart in a direction perpendicular to the conveying direction of the goods.

20. The shelf according to claim 19, wherein the first conveyor and/or the second conveyor comprises a plurality of rolling members arranged in sequence in the conveying direction of the goods, each of the rolling members has an outer contour surface configured for rolling contact with the goods, and the rolling member is configured to rotate in the conveying direction of the goods about an axis of rotation thereof to convey the goods in the conveying direction.

21. The shelf according to claim 20, wherein the rolling member is a rotating roller.

22. A warehousing system, comprising a robot and the shelf according to any of claims 1 to 21, wherein the robot comprises a body and a goods taking mechanism mounted to the body, the goods taking mechanism comprises a tray and a telescopic arm assembly, the tray is configured to place goods, the telescopic arm assembly comprises a telescopic arm and a movable push rod mounted to an end of the telescopic arm, and the movable push rod is configured to pull goods on the shelf onto the tray.
